# FASCICULE DE BREVET EUROPEEN

(11) **EP 1 996 313 B1**
(45) Date de publication et mention de la délivrance du brevet: **06.07.2011**
(21) Numéro de dépôt: 07731126.4
(22) Date de dépôt: 09.03.2007
(51) Int. Cl.: B01D 53/14

(54) **PROCEDE DE DESACIDIFICATION D'UN GAZ PAR SOLUTION ABSORBANTE AVEC REGENERATION FRACTIONNEE PAR CHAUFFAGE**
VERFAHREN ZUR ENTSÄUERUNG EINES GASES MIT HILFE EINER ABSORPTIONSMITTELLÖUNG MIT FRAKTIONIERTER REGENERATION DURCH ERHITZEN
PROCESS FOR DEACIDIFICATION OF A GAS BY MEANS OF AN ABSORBENT SOLUTION WITH FRACTIONATED REGENERATION BY HEATING

(30) Priorité: 10.03.2006 FR 0602138
(43) Date de publication de la demande: 03.12.2008
(73) Titulaire: IFP Energies nouvelles, 92852 Rueil-Malmaison Cedex (FR)
(72) Inventeur: ROJEY, Alexandre, F-92500 Rueil-Malmaison (FR); CADOURS, Renaud, F-69340 Francheville (FR); CARRETTE, Pierre-Louis, F-69005 Lyon (FR); BOUCOT, Pierre, F-69360 Ternay (FR)
(86) Numéro de dépôt international: PCT/FR2007/000430
(87) Numéro de publication internationale: WO 2007/104856

(56) Documents cités:
- EP-A- 0 612 556
- FR-A- 2 036 167
- US-A- 4 251 494
- US-A1- 2004 139 855

## Description

La présente invention concerne le domaine de la désacidification d'un effluent gazeux au moyen d'une solution absorbante. L'invention propose un nouveau mode de régénération de la solution absorbante.

Le procédé selon l'invention permet de retirer les composés acides tels le dioxyde de carbone (CO₂) et l'hydrogène sulfuré (H₂S) contenu dans un effluent gazeux. Il peut s'appliquer au traitement d'un gaz naturel, d'un gaz de synthèse ou de fumées issues d'un processus de combustion.

La régénération de la solution absorbante chargée en composés acides est coûteuse, notamment sur le plan de la consommation d'énergie. Ceci représente un inconvénient important, notamment lorsque l'on met en oeuvre la solution absorbante pour capturer le CO₂ présent dans des fumées de combustion. En effet si la chaleur nécessaire pour régénérer la solution absorbante est obtenue par combustion d'un combustible fossile, on peut être amené à produire une quantité supplémentaire de CO₂ qui rendrait la capture de CO₂ par absorption inintéressante. Le document FR 2 036 167 décrit un procédé pour éliminer le CO2 contenu dans un gaz en utilisant un émulsion contenant une phase aqueuse et un solvant insoluble dans l'eau. En sortie de la zone d'absorption, le solvant est séparé de la phase aqueuse et la phase aqueuse est envoyée à l'étape de régénération thermique.

La présente invention propose de fractionner la solution absorbante chargée en composés acides en deux parties, une fraction riche en composés acides et une partie pauvre en composés acides, et de ne régénérer par distillation que la fraction qui est enrichie en composés acides afin de minimiser l'énergie nécessaire à la régénération de la solution absorbante.

2

La présente invention concerne un procédé de désacidification d'un effluent gazeux comportant au moins un composé acide du groupe constitué par l'hydrogène, sulfuré (H₂S), le dioxyde de carbone (CO₂) selon la revendication 1.

Selon l'invention, à l'étape b), la solution absorbante chargée en composés acides peut être chauffée à une température comprise entre 60°C et 100°C.

A l'étape d), on peut distiller la deuxième fraction de solution absorbante de manière à produire une solution absorbante régénérée appauvrie en composés acides en libérant des composés acides sous forme gazeuse.

L'étape a) peut être effectuée dans une colonne, la première fraction de solution absorbante et la solution absorbante régénérée étant introduites en tête de la colonne.

L'étape a) peut être effectuée dans une colonne, la solution absorbante régénérée étant introduite en tête de la colonne, la première fraction de solution absorbante étant introduite à un niveau intermédiaire entre le fond et la tête de la colonne.

A l'étape c), on peut utiliser l'une des techniques de séparation suivantes : décantation, centrifugation, filtration.

On peut effectuer les étapes b) et c) dans un contacteur membranaire. Le composé réactif de la solution absorbante peut être choisi dans le groupe constitué par: les amines, les alcanolamines, les polyamines, les acides aminés, les sels alcalins d'acides aminés, les amides, les urées, les phosphates, les carbonates et les borates de métaux alcalins.

La solution absorbante peut comporter, en outre, un sel favorisant la propriété de former deux phases séparables lorsque ladite solution a absorbé une quantité de composés acides et qu'elle est chauffée.

La solution absorbante peut comporter, en outre, un composé organique choisi dans le groupe constitué par : une amine, un alcool, une cétone, un vinylalcool, une vinylcétone, un étheralcool, une éthercétone, un glycol, un polyéthylèneglycol, un polypropylèneglycol, un copolymère éthylèneglycol-propylèneglycol, un éthers de glycol, un thioglycol, un thioalcool, une sulfone, un sulfoxyde, une pyrrolidone N-alkylée, une pipéridone N-alkylée, une cyclotétraméthylènesulfone, un N-alkylformamide, un N-alkylacétamide, un phosphate d'alkyl, un carbonate d'alkylène et un carbonate de dialkyle.

Le procédé selon l'invention peut être appliqué à l'un des effluents gazeux suivants : le gaz naturel, le gaz de synthèse, les fumées de combustion, les gaz de raffinerie, les gaz obtenus en queue du procédé Claus, les gaz de fermentation de biomasse.

Dans le procédé selon l'invention, une fraction de la solution absorbante issue de l'étape d'absorption est recyclée vers l'étape d'absorption, sans passage de l'état liquide à l'état vapeur. Ceci permet de réduire de manière importante les coûts associés à l'étape de régénération par distillation.

D'autres caractéristiques et avantages de l'invention seront mieux compris et apparaîtront clairement à la lecture de la description faite ci-après en se référant aux dessins parmi lesquels :
- la figure 1 présente un mode de réalisation du procédé selon l'invention,
- les figures 2 et 3 représentent deux autres modes de réalisation de l'invention.

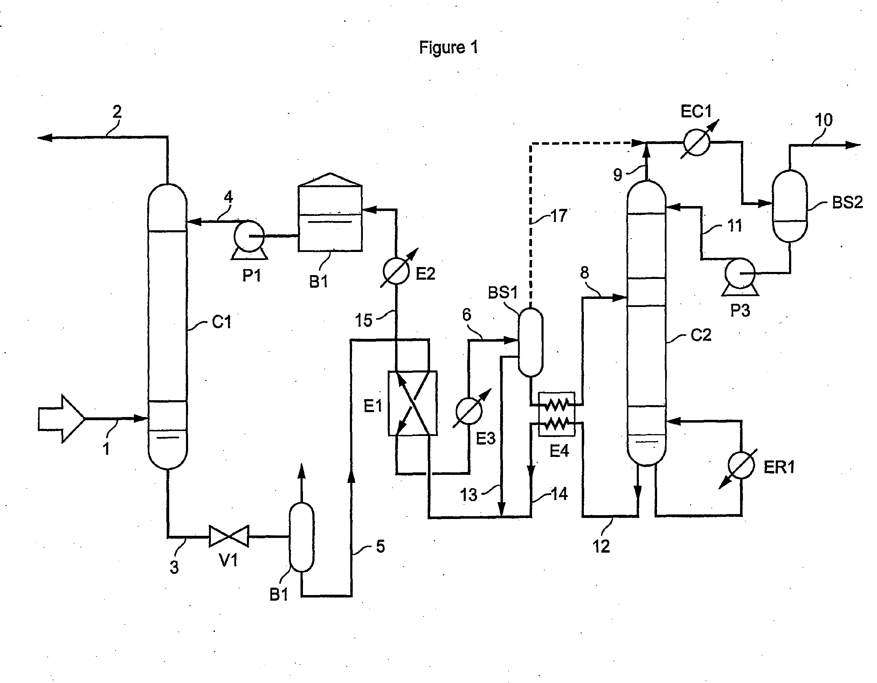

Sur la figure 1, l'effluent gazeux circulant dans le conduit 1 est mis en contact dans la colonne d'absorption C1 avec la solution absorbante arrivant par le conduit 4. Le procédé de désacidification selon l'invention peut être appliqué à différents effluents gazeux. Par exemple, le procédé permet de décarbonater des fumées de combustion, de désacidifier du gaz naturel ou un gaz obtenu en queue du procédé Claus. Le procédé permet également de retirer les composés acides contenus dans les gaz de synthèse, dans les gaz de conversion dans les centrales intégrées de combustion du charbon ou du gaz naturel, et dans les gaz issus de la fermentation de biomasse.

Dans la colonne C1, les composés réactifs de la solution absorbante réagissent avec les composés acides à capturer de façon à former un sel soluble dans une phase aqueuse. Le gaz appauvri en composés acides est évacué de C1 par le conduit 2. La solution absorbante enrichie en composés acides, sous forme de sels dissous dans l'eau, est évacuée de C1 par le conduit 3. Cette solution absorbante enrichie en composés acides comporte néanmoins une proportion, qui peut être importante, de composés réactifs n'ayant pas réagi.

La solution absorbante est une solution aqueuse comportant un ou plusieurs composés réactifs ou présentant une affinité physico-chimique avec les composés acides. De préférence, on choisit une solution absorbante qui comporte des composés qui réagissent de manière réversible avec les composés acides H₂S et CO₂. Selon l'invention, on choisit un composé réactif qui, en phase aqueuse, présente la propriété de former deux phases liquides séparables lorsqu'il a absorbé une quantité déterminée de composés acides et lorsque la température est supérieure à une température critique. En d'autres termes, on choisit le composé réactif de telle sorte que la solution absorbante chargée en composés acides forme deux phases liquides lorsque sa température dépasse une température critique de démixtion.

La nature des composés réactifs peut être choisie en fonction de la nature du ou des composés acides à traiter pour permettre une réaction chimique réversible avec le ou les composés acides à traiter. La structure chimique des composés réactifs peut aussi être choisie de manière à obtenir par ailleurs une stabilité accrue de la solution absorbante dans les conditions d'utilisation.

Les composés réactifs peuvent être par exemple et de façon non limitative des amines (primaires, secondaires, tertiaires, cycliques ou non, aromatiques ou non, saturées ou non), des alcanolamines, des polyamines, des acides aminés, des sels alcalins d'acides aminés, des amides, des urées, des phosphates, des carbonates ou des borates de métaux alcalins.

Les composés réactifs comportant une fonction amine ont de préférence la structure suivante : 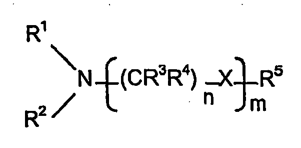
- X représente une fonction amine (N-R⁶) ou un atome d'oxygène (O) ou un atome de soufre (S) ou un disulfure (S-S) ou une fonction carbonyl (C=O) ou une fonction carboxyl (O=C-O) ou une fonction amide (O=C-N-R⁶) ou un phényl ou une fonction nitrile (C N) ou un groupement nitro (NO₂).
- n et m sont des nombres entiers. n peut prendre toutes les valeurs entre 0 et 8, de préférence entre 0 et 6, et m toutes les valeurs entre 1 et 7, de préférence entre 1 et 5.
- R⁶ représente soit un atome d'hydrogène soit une chaîne hydrocarbonée, ramifiée ou non, saturée ou non, comportant de 1 à 12 atomes de carbone, de préférence de 1 à 10 atomes de carbone. R⁶ est absent lorsque X représente une fonction nitrile (C N) ou un groupement nitro (NO₂).
- R¹, R², R³, R⁴ et R⁶ représentent soit un atome d'hydrogène soit une chaîne hydrocarbonée, ramifiée ou non, saturée ou non, comportant de 1 à 12 atomes de carbone, de préférence de 1 à 10 atomes de carbone, soit ont la structure suivante : 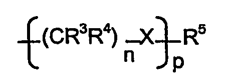
- n et p sont des nombres entiers. n peut prendre toutes les valeurs entre 0 et 8, de préférence entre 0 et 6, et p toutes les valeurs entre 0 et 7, de préférence entre 0 et 5.
- X, R³, R⁴ et R⁵ ont les mêmes définitions que précédemment, ils peuvent respectivement être identiques ou de nature différente des X, R⁸, R⁴ et R⁵ définissant la fonction amine.
- R¹, R², R³, R⁴,R⁵ et R⁶ sont définis de manière à éventuellement être liés par une liaison chimique afin de constituer des cycles ou des hétérocycles, saturés ou non, aromatiques ou non.

A titre d'exemple et de façon non limitative, les composés réactifs comportant une fonction amine peuvent être choisis dans la liste suivante : la monoéthanolamine, la diéthanolamine, la triéthanolamine, le 2-(2-aminoéthoxy)éthanol (diglycolamine), le N,N-diméthylaminoéthoxyéthanol, le N,N,N'-triméthyl-N'-hydroxyéthyl-bisaminoéthyléther, la N,N-bis-(3-diméthylaminopropyl)-N-isopropanolamine, la N-(3-diméthylaminopropyl)-N,N-diisopropanolamine, la N,N-diméthyléthanolamine, la N-méthyléthanolamine, la N-méthyldiéthanolamine, la diisopropanolamine, la morpholine, la N-méthylmorpholine, la N-éthylmorpholine, la N,N-diméthyl-1,3-propanediamine, la N,N,N-tris(3-diméthylaminopropyl)amine, la N,N,N',N'-tétraméthyliminobispropylamine, la N-(3-aminopropyl)morpholine, la 3-méthoxypropylamine, la N-(2-aminoéthyl)pipérazine, le bis-(2-diméthylaminoéthyl)éther, le 2,2-dimorpholinodiéthyléther, la N,N'-diméthylpipérazine, la N,N,N',N',N"-pentaméthyldiéthylènetriamine, la N,N,N',N',N"-pentaméthyldipropylènetriamine, la N,N-Bis(2,2-diéthoxyéthyl)méthylamine, la 3-butyl-2-(1-éthylpentyl)oxazolidine, la 3-éthyl-2-méthyl-2-(3-méthylbutyl)oxazolidine, la 1,2,2,6,6-pentaméthyl-4-pipéridone, la 1-(2-méthylpropyl)-4-piperidone, la N,N,N',N'-tétraéthyléthylènediamine, la N,N,N',N'-tétraéthyliminobiséthylamine, la 1,1,4,7,10,10-hexaméthyltriéthylènetétramine, la 1-phénylpipérazine, la 1-formylpipérazine, le 1-pipérazinecarboxylate d'éthyl, la N,N'-di-tert-butyléthylènediamine, la 4-éthyl-2-méthyl-2-(3-méthylbutyl)oxazolidine, la téraéthylènepentamine, la triéthylènetétramine, la N,N-diéthyldiéthylènetriamine; la N¹-isopropyldiéthylènetriamine, la N,N-diméthyldipropylènetriamine, la diéthylènetriamine, la N-(2-aminoéthyl)-1,3-propanediamine, la 2,2'-(éthylènedioxy)diéthylamine, la N-(2-aminoéthyl)morpholine, la 4-amino-2,2,6,6-tétraméthylpipéridine, le 1,2-diaminocyclohexane, la 2-pipéridinoéthylamine, la 2-(2-aminoéthyl)-1-méthylpyrrolidine, l'éthylènediamine, la N,N-diéthyléthylènediamine, la N-phényléthylènediamine, la 4,9-dioxa-1,16-dodécanediamine, la 4,7,10-trioxa-1,13-tridécanediamine, la 1,2,4-triméthylpipérazine, la N,N'-diéthyl-N,N'-diméthyléthylènediamine, la N,N-diéthyl-N',N'-diméthyléthylènediamine, la 1,4,7-triméthyl-1,4,7-triazacyclononane, la 1,4-diméthyl-1,4-diazacycloheptane, la N-(2-diméthylaminoéthyl)-N'-méthylpipérazine, la N,N,N',N'-tétraéthylpropylènediamine, la 1-[2-(1-pipéridinyl)éthyl)]pipéridine, la 4,4'-éthylènedimorpholine, la N,N,N',N'-tétraéthyl-N"-méthyl-dipropylènetriamine, la 4-(diméthylamino)-1,2,2,6,6-pentaméthylpipéridine, le 1,5,9-triméthyl-1,5,9-triazacyclododécane, le 1,4,8,11-tétraméthyl-1,4,8,11-tétraazacyclotétradécane, la N,N'-difurfuryléthylènediamine, le 1,2-Bis(2-aminoéthyl)thioéthane, le Bis(2-aminoéthyl)disulfure, le Bis(2-diméthylaminoéthyl)sulfure, le 1-acéthyl-2-diéthylaminoéthane, le 1-amino-2-benzylaminoéthane, le 1-acéthyl-3-diméthylaminopropane, le 1-diméthylamino-3,3-diphénylpropane, le 2-(diméthylaminométhyl)thiophène, la N,N,5-triméthylfurfurylamine, la N,N-Bis(tétrahydro-2-furanylméthyl)amine, la 2-(éthylsulfanyl)éthanamine, la thiomorpholine, le 2-[(2-aminoéthyl)sulfanyl]éthanol, le 3-thiomorpholinylméthanol, le 2-(butylamino)éthanethiol, le Bis(2-diéthylaminoéthyl)éther, le 1-diméthylamino-2-éthylméthylaminoéthoxyéthane, le 1,2,3-triaminopropane, le N∼1∼-(2-aminopropyl)-1,2-propanediamine, la N-méthylbenzylamine, la N-éthylbenzylamine, la N-propylbenzylamine, la N-isopropylbenzylamine, la N-butylbenzylamine, la N-tertiobutylbenzylamine, la N-benzylpipéridone, la 1,2,3,4-tétrahydroisoquinoline, la 1-(2-méthoxyphényl)pipérazine, la 2-méthyl-1-(3-méthylphényl)pipérazine, la 1-(2-pyridinyl)pipérazine, la benzhydrylamine, la N-benzyl-N',N'-diméthyléthylénediamine, le 3-(méthylamino)propionitrile, le 3-(éthylamino)propionitrile, le 3-(propylamino)propionitrile, le 3-(butylamino)propionitrile, 3-(tertiobutylamino)propionitrile, le 3-(pentylamino)propionitrile, le 3-aminopropionitrile, le 3-(1-pipéridino)propionitrile, la 1-hexanamine, la 1-heptanamine, la 1-octanamine, la N-propyl-1-propanamine, la N,N-dibutyl-1,2 éthanediamine, la N,N,N',N'-tétraméthyl-1,6-hexanediamine, la N,N'-dibutyl-. 1,3-propanediamine, la N,N,N',N'-tétraméthyléthylènediamine, la N,N,N',N'-tétraméthylpropylènediamine, la N,N-diéthylpropylènediamine et la N,N,N',N'-tétraméthyl-1,3-butanediamine.

Les composés réactifs peuvent représenter de 10 à 100% poids de la solution absorbante, préférentiellement de 25 à 90% poids.

La solution absorbante peut éventuellement contenir, en outre, un ou plusieurs activateurs pour favoriser l'absorption des composés à traiter. Il s'agit par exemple d'amines, d'acides aminés, de sels alcalins d'acides aminés, de phosphates, de carbonates ou de borates de métaux alcalins.

Les activateurs comportant une fonction amine peuvent avoir de préférence la structure suivante : 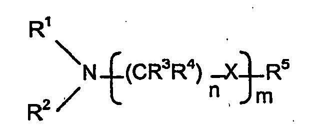
- X représente une fonction amine (N-R⁶) ou un atome d'oxygène (O) ou un atome de soufre (S) ou un disulfure (S-S) ou une fonction carbonyl (C=O) ou une fonction carboxyl (O=C-O) ou une fonction amide (O=C-N-R⁶) ou un phényl ou une fonction nitrile (C N) ou un groupement nitro (NO₂).
- n et m sont des nombres entiers. n peut prendre toutes les valeurs de 0 à 8, de préférence de 0 à 6, et m toutes les valeurs de 1 à 7, de préférence de 1 à 5.
- R⁵ représente soit un atome d'hydrogène soit une chaîne hydrocarbonée, ramifiée ou non, saturée ou non, comportant de 1 à 12 atomes de carbone, de

préférence de 1 à 10 atomes de carbone. R⁶ est absent lorsque X représente une fonction cyano (C N) ou un groupement nitro (NO₂).
- R¹, R², R⁸, R⁴ et R⁶ représentent soit un atome d'hydrogène soit une chaîne hydrocarbonée, ramifiée ou non, saturée ou non, comportant de 1 à 12 atomes de carbone, de préférence de 1 à 10 atomes de carbone, soit ont la structure suivante : 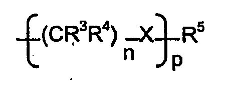
- n et p sont des nombres entiers. n peut prendre toutes les valeurs entre 0 et 8, de préférence entre 0 et 6, et p toutes les valeurs entre 0 et 7, de préférence entre 0 et 5.
- X, R⁸, R⁴ et R⁶ ont les mêmes définitions que précédemment, ils peuvent respectivement être identiques ou de nature différente des X, R⁸, R⁴ et R⁵ définissant la fonction amine.
- R¹, R², R⁸, R⁴, R⁵ et R⁶ sont définis de manière à éventuellement être liés par une liaison chimique afin de constituer des cycles ou des hétérocycles, saturés ou non, aromatiques ou non.
- R¹, R² et R⁶ sont définis de telle manière qu'au moins l'un d'eux représente un atome d'hydrogène

La concentration en activateur est comprise entre 0 et 30% poids, de préférence entre 0 et 15% poids de la solution absorbante.

Par exemple, les activateurs peuvent être choisis dans la liste suivante : la monoéthanolamine, la diéthanolamine, le 2-(2-aminoéthoxy)éthanol (diglycolamine), la N-méthyléthanolamine, la N-éthyléthanolamine, la N-propyléthanolamine, la N-butyléthanolamine, la N-(2-aminoéthyl)éthanolamine, la diisopropanolamine, le 3-amino-1-propanol, la morpholine, la N,N-diméthyl-1,3-propanediamine, la N,N,N',N'-tétraméthyliminobispropylamine, la N-(3-aminopropyl)morpholine, la 3-méthoxypropylamine, la 3-éthoxypropylamine, la N-(2-aminoéthyl)pipérazine, la N-(3-aminopropyl)pipérazine, la N,N,N',N'-tétraéthyliminobiséthylamine, la 1-phénylpipérazine, la 1-formylpipérazine, le 1-pipérazinecarboxylaté d'éthyl, la N,N'-di-tert-butyléthylènediamine, la 4-éthyl-2-méthyl-2-(3-méthylbutyl)oxazolidine, la tétraéthylènepentamine, la triéthylènetétramine, la N,N-diéthyldiéthylènetriamine, la N∼1∼-isopropyldiéthylènetriamine, la N,N-diméthyldipropylènetriamine, la dipropylènetriamine, la diéthylènetriamine, la N-(2-aminoéthyl)-1,3-propanediamine, la 2,2'-(éthyiènedioxy)diéthylamine, la N-(2-aminoéthyl)morpholine, la 4-amino-2,2,6,6-tétraméthylpipéridine, la N-(2-aminoéthyl)pipéridine, la N-(3-aminopropyl)pipéridine, le 1,2-diaminocyclohexane, la N-cyclohexyl-1,3-propanediamine, la 2-pipéridinoéthylamine, la 2-(2-aminoéthyl)-1-méthylpyrrolidine, l'éthylènediamine, la N,N-diéthyléthylènediamine, la N-phényléthylènediamine, la 4,9-dioxa-1,12-dodécanediamine, la 4,7,10-trioxa-1,13-tridécanediamine, la furfurylamine, la N,N'-difurfuryléthylénediamine, le 1,2-Bis(2-aminoéthyl)thioéthane, le Bis(2-aminoéthyl)disulfure, le Bis(aminoéthyl)sulfure, le 1-amino-2-benzylaminoethane le 2-(aminométhyl)thiophène, la N,N-Bis(tétrahydro-2-furanylméthyl)amine, la 2-(éthylsulfanyl)éthanamine, la thiomorpholine, le 2-[(2-aminoéthyl)sulfanyl]éthanol, le 2-(butylamino)éthanethiol, le 1,2,3-triaminopropane, le 1,3-diaminopropane, le 1,4-diaminobutane, le 1,5-diaminopentane, l'hexaméthylènediamine, la 1,2-propanediamine, la 2-méthyl-1,2-propanediamine, la 2-méthylpipérazine, la N∼2∼,N∼2∼-diméthyl-1,2-propanediamine, la N∼1∼,N∼1∼-diméthyl-1,2-propanediamine, la 2,6-diméthylpipérazine, la 1-éthyl-3-pipéridinamine, la N∼1∼-(2-aminopropyl)-1,2-propanediamine, la décahydroquinoxaline, la 2,3,5,6-tétraméthylpipérazine, la N,N-diméthyl(2-pipéridinyl)méthanamine, la 1-(2-pipéridinylméthyl)pipéridine, la 2,2-diméthyl-1,3-propanediamine, la N∼1∼,N∼3∼,2-triméthyl-1,3-propanediamine, la 2-(aminométhyl)-2-méthyl-1,3-propanediamine, la N-1-,N-1-,2,2-tétraméthyl-1,3-propanediamine, la 1-méthoxy-2-propanamine, la tétrahydro-2-furanylméthylamine, la 2,6-diméthylmorpholine, la N-méthyl(tétrahydro-2-furanyl)méthanamine, la N-méthylbenzylamine, la N-éthylbenzylamine, la N-propylbenzylamine, la N-isopropylbenzylamine, la N-butylbenzylamine, la 1,2,3,4-tétrahydroisoquinoline, la 1-(2-méthoxyphényl)pipérazine, la 2-méthyl-1-(3-méthylphényl)pipérazine, la 1-(2-pyridinyl)pipérazine, la benzhydrylamine, la N-benzyl-N',N'-diméthyléthylènediamine, le 3-(méthylamino)propionitrile, le 3-(éthylamino)propionitrile, le 3-(propylamino)propionitrile, le 3-(butylamino)propionitrile, 3-(tertiobutylamino)propionitrile, le 3-(pentylamino)propionitrile, le 3-aminopropionitrile, la 1-hexanamine, la 1-heptanamine, la 1-octanamine, la N-propyl-1-propanamine, la N,N-dibutyl-1,2-éthanediamine, la N,N'-dibutyl-1,3-propanediamine et la N,N-diéthylpropylènediamine.

L'addition d'un solvant qui conduit à la formation de deux phases liquides par élévation de la température peut être combinée à l'utilisation d'une amine largement disponible et d'un coût relativement peu élevé telle que la monoethanolamine (MEA), la diéthanolamine (DEA), la methyldiethanolamine (MDEA) ou la diglycolamine (DGA) dans des conditions qui normalement ne provoqueraient pas la formation de deux phases liquides.

La solution absorbante peut également comporter un composé supplémentaire, par exemple un sel, favorisant le phénomène de démixtion. Ces sels peuvent être par exemple et de façon non limitative des sels d'alcalin, d'alcalino-terreux, de métaux, d'amines, d'acides aminés ou un mélange. L'anion associé peut être par exemple et de façon non limitative un halogénure, un phosphate, un pyrophosphate, un sulfite, un sulfate, un hypochlorite, un nitrate, un nitrite, un phosphite, un carboxylate ou un mélange. La ou les amines utilisées pour faire ces sels peuvent être l'une ou plusieurs des amines qui sont présentes dans la solution absorbante en tant que composés réactifs avec les composés acides, ou en tant qu'activateur, et qui sont partiellement neutralisées par un ou plusieurs acides plus forts que les acides présents dans l'effluent gazeux traité. Les acides utilisés peuvent être par exemple et de façon non limitative de l'acide phosphorique, de l'acide pyrophosphorique, de l'acide phosphoreux, de l'acide hypochloreux, de l'acide nitreux, de l'acide oxalique, de l'acide acétique, de l'acide formique, de l'acide propanoique, de l'acide butanoique, de l'acide nitrique, de l'acide sulfurique, de l'acide sulfureux, de l'acide chlorhydrique, des acides aminés ou un mélange. D'autres types d'amines neutralisées par de tels acides peuvent aussi être ajoutées à la solution absorbante, par exemple sous forme de sels d'ammonium ou d'autres sels d'amines ou un mélange de sels d'amine. On citera à titre d'exemple le sulfate d'ammonium, le phosphate d'ammonium ou la sulfite d'ammonium. Ces sels peuvent aussi résulter de la dégradation partielle de la solution absorbante, par exemple suite à la réaction des composés réactifs avec une impureté dans le gaz traité. Les sels peuvent également être obtenus suite à l'introduction de soude ou de potasse pour neutraliser des acides formés dans l'unité de mise en oeuvre du procédé. Par ailleurs, l'ajout de sels peut éventuellement être évité dans les cas où les activateurs, les composés réactifs ou tout autre additif sont par nature des sels. La concentration en sels peut être adaptée en fonction de la pression partielle et de la nature du ou des composés acides présents dans la charge gazeuse à traiter, ainsi qu'aux conditions de mise en oeuvre.

La solution absorbante peut également comporter un ou plusieurs composés organiques dans le but de favoriser le phénomène de démixtion. Il peut s'agir d'amines, d'alcools, de cétones, de vinylalcools, de vinylcétones, d'étheralcools, d'éthercétones, de glycols, de polyéthylèneglycols, de polypropylèneglycols, de copolymères éthylèneglycol-propylèneglycol, d'éthers de glycols, de thioglycols, de thioalcools, de sulfones, de sulfoxydes, de pyrrolidones N-alkylées, de pipéridones N-alkylées, de cyclotétraméthylènesulfones, de N-alkylformamides, de N-alkylacétamides, des phosphates d'alkyls, des carbonates d'alkylènes ou des carbonates de dialkyles et leurs dérivés. A titre d'exemple et de façon non limitative, il pourra s'agir de 2-butanol, 2-butoxyéthanol, de 2-méthyl-3-butène-2-ol, la 3-butène-2-one, le polyéthyléneglycol de masse molaire 400g/mol, le tétraéthylèneglycoldiméthyléther, le sulfolane, la N-méthylpyrrolidone, la 1,3-dioxan-2-one, le carbonate de propylène, le carbonate d'éthylène, le carbonate de diéthyle, le carbonate de glycérol, le diméthylpropylèneurée, le N-méthylcaprolactame, le diméthylformamide, le diméthylacétamide, le formamide, l'acétamide, la 2-méthoxy-2-méthyl-3-butanone, la 2-méthoxy-2-méthyl-4-pentanone, le 1,8-dihydroxy-3,6-dithiaoctane, le 1,4-dithiane-2,5-diol, le 2-(méthylsulfonyl)éthanol, le bis(2-hydroxyéthyl)sulfone, le 1,4-dithioérythritol ou le tributylphosphate

La solution absorbante circulant dans le conduit 3 est détendue à travers l'organe de détente V1 de manière à vaporiser une partie des composés acides absorbés et éventuellement des hydrocarbures co-absorbés. La fraction vapeur produite par la détente dans V1 est séparée de la solution absorbante et évacuée en tête du ballon B1. Selon sa composition, cette fraction vapeur peut être recyclée en amont du procédé, être utilisée comme gaz combustible ou bien être mélangée avec le flux circulant dans le conduit 10. Ensuite, la solution absorbante est envoyée par le conduit 5 dans l'échangeur de chaleur E1 puis dans E3. Elle ressort à une température plus élevée par le conduit 6. Dans les échangeurs de chaleur E1 et E3, la solution absorbante chargée en composés acides est chauffée jusqu'à atteindre une température supérieure à la température critique à laquelle la solution chargée en composés acides forme deux phases liquides séparables. Par exemple, la solution absorbante chargée en composés acides est chauffée à une température comprise entre 60°C et 100°C. Ainsi, le fluide circulant dans le conduit 6 est composé de deux phases liquides séparables : une phase riche en composés acides et une phase pauvre en composés acides. De plus, sous l'effet de la hausse de température, une partie des composés acides est libérée sous forme gazeuse. Les trois phases du fluide circulant dans le conduit 6 sont séparées dans le ballon de séparation BS1. La fraction gazeuse issue en tête de BS1 est envoyée par le conduit 17 en tête de la colonne de distillation C2. Une première fraction liquide enrichie en composés acides, c'est-à-dire enrichie en composés actifs ayant réagi avec les composés acides, est envoyée par le conduit 8 dans la colonne de distillation. Une deuxième fraction liquide appauvrie en composés acides, c'est-à-dire enrichie en composés actifs n'ayant pas réagi, est évacuée de BS1 par le conduit 13.

La première fraction liquide enrichie en composés acides circulant dans le conduit 8 peut être réchauffée par échange de chaleur dans l'échangeur E4, puis cette fraction liquide est introduite dans la colonne de distillation C2 pour être régénérée. La colonne C2 est équipée d'un rebouilleur. Dans C2, les composés réactifs de la solution absorbante sont séparés des composés acides. Les composés acides sont vaporisés et évacués de C2 par le conduit 9. Le gaz est refroidi dans le condenseur EC1 de manière à être partiellement liquéfié. Le ballon de séparation BS2 permet de recueillir la fraction liquide qui est pompée par la pompe P3 pour être introduite par le conduit 11 en tête de la colonne C2 à titre de reflux. La fraction vapeur est évacuée de BS2 par le conduit 10. La solution absorbante régénérée est recueillie en fond de la colonne C2 par le conduit 12.

La chaleur libérée par le refroidissement de la solution absorbante récupérée en fond de la colonne C2 peut être récupérée pour chauffer différents flux devant être régénérés. Par exemple, en référence à la figure 1, la solution absorbante circulant dans le conduit 12 permet de réchauffer dans l'échangeur de chaleur indirect E4, la première fraction liquide issue de BS1 par le conduit 8. Ensuite, cette solution circulant dans le conduit 14 est mélangée avec la deuxième fraction liquide issue de BS1 par le conduit 13. Ce mélange est introduit dans l'échangeur E1 pour réchauffer la solution absorbante circulant dans le conduit 5. Puis, le mélange circulant dans le conduit 15 est refroidi par l'échangeur E2 à la température de fonctionnement de la colonne C1. La solution absorbante est stockée dans le bac de stockage B1, d'où elle est reprise par la pompe P1 pour être introduite par le conduit 4 dans la colonne C1.

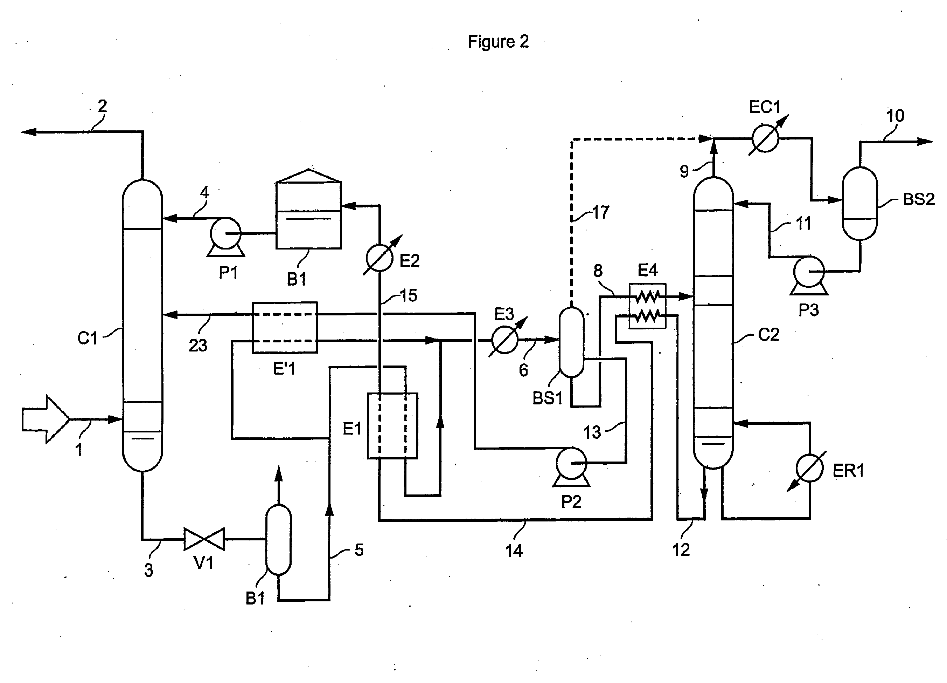

Dans certains cas, on peut souhaiter recycler une solution absorbante très pauvre en composés acides, c'est-à-dire avec une grande capacité d'absorption, en tête de la colonne C1 afin d'augmenter l'efficacité de l'élimination des composés acides et d'atteindre des spécifications poussées sur le gaz traité. Par exemple, la fraction de solution absorbante appauvrie en composés acides séparée dans le ballon de séparation BS1 peut ne pas être suffisamment performante pour capter des composés acides. Ainsi, dans certains cas, on peut préférer envoyer la fraction de solution absorbante appauvrie en composés acides issue de BS1 en un point intermédiaire de la colonne d'absorption C1, comme cela est schématisé par la figure 2. Dans ce cas, seule la fraction de solution absorbante régénérée par distillation dans C2 est envoyée en tête de la colonne.

Les références de la figure 2 identiques aux références de la figure 1 désignent les mêmes éléments.

Sur la figure 2, la solution absorbante chargée en composés acides circulant dans le conduit 5 est séparée en deux flux respectivement chauffés dans les échangeurs de chaleur E1 et E'1, puis rassemblés et éventuellement chauffés par l'échangeur E3, puis introduits dans le ballon de séparation BS1.

La deuxième fraction de solution absorbante appauvrie en composés acides issue de BS1 par le conduit 13 est reprise par la pompe P2, refroidie par échange de chaleur dans E'1, puis introduite par le conduit 23 en un point intermédiaire de la colonne d'absorption C1. Le conduit 23 permet d'injecter la solution absorbante dans C1 entre le fond et la tête de la colonne, à un niveau inférieur au point d'introduction par le conduit 4.

La solution absorbante régénérée obtenue en fond de la colonne C2 est envoyée après passage dans les organes E4, E1, E2, B1 et P1 en tête de la colonne C1 par le conduit 4.

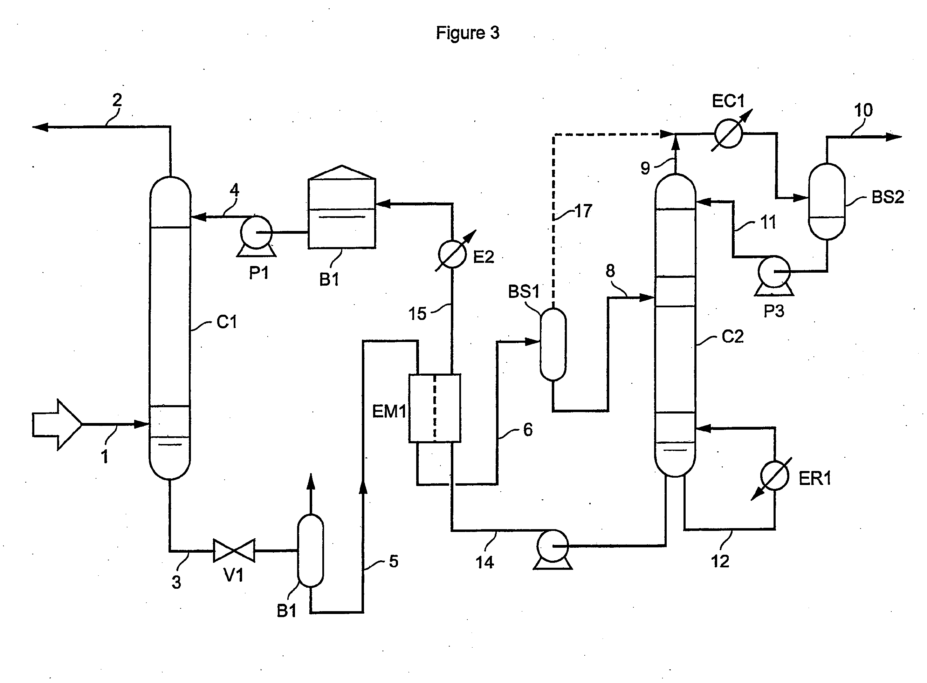

Le procédé schématisé par la figure 3 propose d'utiliser un contacteur membranaire pour mettre en oeuvre l'invention. Les références de la figure 3 identiques aux références de la figure 1 désignent les mêmes éléments

Sur la figure 3, la solution absorbante chargée en composés acides circulant dans le conduit 5 est introduite dans le contacteur membranaire EM1 pour être mise en contact avec la solution absorbante régénérée arrivant par le conduit 14. Dans le contacteur membranaire, les flux sont mis en contact par l'intermédiaire d'une membrane dont la couche active a la propriété d'être perméable de façon sélective aux composés réactifs ayant réagit avec des composés acides. Par exemple, la membrane est un matériau polymère tel qu'un silicone.

Dans le contacteur membranaire EM1, la solution arrivant par 5 s'échauffe au contact indirect de la solution arrivant par 14. Lorsque la solution arrivant par le conduit 5 dépasse la température critique de démixtion, cette solution se sépare en deux phases liquides : une phase comportant les composés réactifs ayant réagi avec des composés acides et une phase comportant les composés réactifs n'ayant pas réagi avec des composés acides. La perméabilité sélective de la membrane de EM1 permet le transfert des composés réactifs n'ayant pas réagi du flux 5 vers le flux 14.

La solution absorbante chargée en composés acides issue du contacteur membranaire par le conduit 6 est appauvrie en composés réactifs n'ayant pas réagi, par rapport à la solution circulant dans le conduit 5. Elle est introduite dans le ballon BS1 dans lequel les composés acides libérés sous forme gazeuse sont évacués par le conduit 17. La solution absorbante chargée en composés acides soutirée en fond de BS1 est introduite par le conduit 8 dans la colonne de distillation C2 pour être régénérée.

La solution absorbante appauvrie en composés acides issue du contacteur membranaire par le conduit 15 est enrichie en composés réactifs n'ayant par réagi, par rapport à la solution circulant dans le conduit 14.

La mise en oeuvre du contacteur membranaire EM1 présente l'avantage d'effectuer, dans un même dispositif, le chauffage et la séparation des phases obtenues par démixtion.

Les exemples numériques présentés ci-après permettent d'illustrer la présente invention.

### Exemple numérique 1 :

On considère une solution eau-N-propyl-1-propanamine à 20°C, dont la composition est la suivante, en fractions molaires :
- eau : 0,6
- N-propyl-1-propanamine : 0,4

A une température de 80°C, on forme deux phases, dont une phase aqueuse presque pure et une phase organique enrichie en N-propyl-1-propanamine dont la composition est la suivante :
- eau : 0,24
- N-propyl-1-propanamine : 0,76

### Exemple numérique 2 :

Un solvant composé de 75% poids de N,N,N',N'-tétraméthyl-1,3-butanediamine et de 25% poids d'eau est mis en contact à 25°C et à pression atmosphérique dans un contacteur gaz-liquide avec un mélange gazeux N₂-CO₂ contenant 10% volume de CO₂ jusqu'à obtention d'un équilibre. Après chauffage à 60°C, le solvant démixe de manière à former deux phases liquides. Le CO₂ absorbé se concentre dans la phase la plus dense. Cette phase représente 10% du poids total du solvant.

La mise en oeuvre du procédé selon l'invention est particulièrement intéressante dans le cas d'une faible teneur en composés acides dans la solution absorbante. C'est par exemple le cas lorsque l'on doit traiter un gaz contenant une teneur en H₂S réduite, par exemple de 100 ppm, pour la ramener, par exemple, à 3 ppm. Dans ce cas, on envoie à la colonne de régénération essentiellement la fraction formée par l'eau contenue dans la solution absorbante de départ. Ceci permet de n'avoir à régénérer qu'une fraction relativement faible de la solution absorbante.

En outre, dans ce cas, on peut opérer le rebouilleur de la colonne de régénération à une température relativement basse, proche de 100°C. Ceci permet d'utiliser pour effectuer ce rebouillage de la chaleur à relativement bas niveau, provenant par exemple de rejets thermiques. Il est également possible d'augmenter la pression à laquelle est effectuée la régénération, pour obtenir des gaz acides sous pression, en réduisant ainsi le coût et la consommation d'énergie de l'installation de compression des gaz acides, lorsque ceux-ci doivent être réinjectés dans le sous-sol.

La présente invention est également intéressante dans le cas du traitement d'un gaz fortement acide, lorsque l'amine utilisée peut être au moins en partie régénérée par simple détente. Dans ce cas l'amine utilisée peut être au moins en partie régénérée par simple détente. Dans ce cas l'amine ne formant pas de sel peut être au moins en partie séparée par démixtion, ce qui permet de ne pas l'envoyer à la colonne de régénération.

## Revendications

1. Procédé de désacidification d'un effluent gazeux comportant au moins un composé acide du groupe constitué par l'hydrogène sulfuré (H₂S), le dioxyde de carbone (CO₂), dans lequel on effectue les étapes suivantes :
a) on met en contact l'effluent gazeux avec une solution absorbante de manière à obtenir un effluent gazeux appauvri en composés acides et une solution absorbante chargée en composés acides, la solution absorbante comportant au moins un composé réactif en phase aqueuse, la solution absorbante étant choisie pour sa propriété de former deux phases liquides séparables lorsqu'elle a absorbé une quantité de composés acides et qu'elle est chauffée,
b) on chauffe la solution absorbante chargée en composés acides de manière à ce que la solution absorbante se sépare en deux fractions liquides : une première fraction de solution absorbante appauvrie en composés acides et une deuxième fraction de solution absorbante enrichie en composés acides,
c) on sépare lesdites deux fractions obtenues à l'étape b),
d) on régénère la deuxième fraction par distillation de manière à produire une solution absorbante régénérée appauvrie en composés acides en libérant des composés acides sous forme gazeux,
e) on recycle la première fraction de solution absorbante et la solution absorbante régénérée, en tant que solution absorbante à l'étape a).

2. Procédé selon la revendication 1, dans lequel, à l'étape b) la solution absorbante chargée en composés acides est chauffée à une température comprise entre 60°C et 100°C.

3. Procédé selon l'une des revendications précédentes, dans lequel l'étape a) est effectuée dans une colonne, la première fraction de solution absorbante et la solution absorbante régénérée étant introduites en tête de la colonne.

4. Procédé selon l'une des revendications 1 et 2, dans lequel l'étape a) est effectuée dans une colonne, la solution absorbante régénérée étant introduite en tête de la colonne, la première fraction de solution absorbante étant introduite à un niveau intermédiaire entre le fond et la tête de la colonne.

5. Procédé selon l'une des revendications précédentes, dans lequel, à l'étape c) on utilise l'une des techniques de séparation suivantes: décantation, centrifugation, filtration.

6. Procédé selon l'une des revendications 1 à 4, dans lequel on effectue les étapes b) et c) dans un contacteur membranaire.

7. Procédé selon l'une des revendications précédentes, dans lequel le au moins un composé réactif est choisi dans le groupe constitué par : les amines, les alcanolamines, les polyamines, les acides aminés, les sels alcalins d'acides aminés, les amides, les urées, les phosphates, les carbonates et les borates de métaux alcalins.

8. Procédé selon la revendication 7, dans lequel le au moins un composé réactif est la N,N,N',N'-tétraméthyl-1,6-hexanediamine.

9. Procédé selon la revendication 8, dans lequel la solution absorbante comporte, en outre, un sel favorisant la propriété de former deux phase séparables lorsque ladite solution a absorbé une quantité de composés acides et qu'elle est chauffée.

10. Procédé selon l'une des revendication 8 et 9, dans lequel la solution absorbante comporte, en outre, un composé organique choisi dans le groupe constitué par : une amine, un alcool, une cétone, un vinylalcool, une vinylcétone, un étheralcool, une éthercétone, un glycol, un polyéthylèneglycol, un polypropylèneglycol, un copolymère éthylèneglycol-propylèneglycol, un éthers de glycol, un thioglycol, un thioalcool, une sulfone, un sulfoxyde, une pyrrolidone N-alkylée, une pipéridone N-alkylée, une cyclotétraméthylènesulfone, un N-alkylformamide, un N-alkylacétamide, un phosphate d'alkyl, un carbonate d'alkylène et un carbonate de dialkyle.

11. Procédé selon l'une des revendications précédentes, dans lequel l'effluent gazeux est choisi dans le groupe constitué par le gaz naturel, le gaz de synthèse, les fumées de combustion, les gaz de raffinerie, les gaz obtenus en queue du procédé Claus, les gaz de fermentation de biomasse.

## Claims

1. Method of deacidification of a gaseous effluent comprising at least one acidic compound of the group formed by hydrogen sulphide (H₂S) and carbon dioxide (CO₂), in which the following steps are performed:
a) the gaseous effluent is put in contact with an absorbent solution so as to obtain a gaseous effluent depleted in acidic compounds and an absorbent solution charged with acidic compounds, the absorbent solution comprising at least one reactive compound in aqueous phase, the absorbent solution being selected for its property of forming two separable liquid phases when it has absorbed a quantity of acidic compounds and is heated,
b) the absorbent solution charged with acidic compounds is heated so that the absorbent solution separates into two liquid fractions: a first fraction of absorbent solution depleted in acidic compounds and a second fraction of absorbent solution enriched in acidic compounds,
c) said two fractions obtained in step b) are separated,
d) the second fraction is regenerated by distillation so as to produce a regenerated absorbent solution depleted in acidic compounds by releasing acidic compounds in gaseous form,
e) the first fraction of absorbent solution and the regenerated absorbent solution are recycled, as absorbent solution to step a).

2. Method in accordance with claim 1, in which, in step b), the absorbent solution charged with acidic compounds is heated to a temperature of between 60°C and 100°C.

3. Method in accordance with one of the preceding claims, in which step a) is performed in a column, the first fraction of absorbent solution and the regenerated absorbent solution being introduced at the top of the column.

4. Method in accordance with one of claims 1 and 2, in which step a) is performed in a column, the regenerated absorbent solution being introduced at the top of the column, the first fraction of absorbent solution being introduced at an intermediate level between the bottom and the top of the column.

5. Method in accordance with one of the preceding claims, in which one of the following separation techniques is used in step c): decantation, centrifugation and filtration.

6. Method in accordance with one of claims 1 to 4, in which steps b) and c) are performed in a membrane contactor.

7. Method in accordance with one of the preceding claims, in which the at least one reactive compound is selected from the group formed by: amines, alkanolamines, polyamines, amino acids, alkaline salts of amino acids, amides, ureas, phosphates, carbonates and borates of alkaline metals.

8. Method in accordance with claim 7, in which the at least one reactive compound is N,N,N',N'-tetramethyl-1,6-hexanediamine.

9. Method in accordance with claim 8, in which the absorbent solution comprises, in addition, a salt promoting the property of forming two separable phases when said solution has absorbed a quantity of acidic compounds and is heated.

10. Method in accordance with one of claims 8 and 9, in which the absorbent solution comprises, in addition, an organic compound selected from the group formed by: an amine, an alcohol, a ketone, a vinyl alcohol, a vinyl ketone, an ether alcohol, an ether ketone, a glycol, a polyethylene glycol, a polypropylene glycol, an ethylene glycol - propylene glycol copolymer, a glycol ethers, a thioglycol, a thioalcohol, a sulphone, a sulphoxide, an N-alkylated pyrrolidone, an N-alkylated piperidone, a cyclotetramethylene sulphone, an N-alkylformamide, an N-alkylacetamide, an alkyl phosphate, an alkylene carbonate and a dialkyl carbonate.

11. Method in accordance with one of the preceding claims, in which the gaseous effluent is selected from the group formed by natural gas, synthesis gas, combustion fumes, refinery gases, the gases obtained at the end of the Claus process and biomass fermentation gases.

## Patentansprüche

1. Verfahren zur Entsäuerung eines Abgasstroms, der mindestens eine saure Verbindung der Gruppe aufweist, die aus Schwefelwasserstoff (H₂S), Kohlendioxid (CO₂) besteht, wobei die folgenden Schritte durchgeführt werden:
a) der Abgasstrom wird derart mit einer absorbierenden Lösung in Kontakt gebracht, dass ein Abgasstrom, der an sauren Verbindungen abgereichert ist, und eine absorbierende Lösung, die an sauren Verbindungen angereichert ist, erhalten werden, wobei die absorbierende Lösung mindestens eine reaktive Verbindung in wässriger Phase aufweist, wobei die absorbierende Lösung aufgrund ihrer Eigenschaft ausgewählt ist, zwei trennbare flüssige Phasen zu bilden, wenn sie eine gewisse Menge an sauren Verbindungen absorbiert hat und erhitzt wird,
b) die absorbierende Lösung, welche die sauren Verbindungen aufgenommen hat, wird derart erhitzt, dass die absorbierende Verbindung sich in zwei flüssige Fraktionen auftrennt: eine erste Fraktion der absorbierenden Lösung, die an sauren Verbindungen abgereichert ist, und eine zweite Fraktion der absorbierenden Lösung, die an sauren Verbindungen angereichert ist,
c) die beiden Fraktionen, die in Schritt b) erhalten wurden, werden getrennt,
d) die zweite Fraktion wird durch Destillation derart regeneriert, dass eine regenerierte absorbierende Lösung hergestellt wird, die durch Freisetzung der sauren Verbindungen in Gasform an sauren Verbindungen abgereichert ist,
e) die erste Fraktion der absorbierenden Lösung und die regenerierte absorbierende Lösung werden als absorbierende Lösung wieder zum Schritt a) zurückgeführt.

2. Verfahren nach Anspruch 1, wobei in Schritt b) die absorbierende Lösung, welche die sauren Verbindungen aufgenommen hat, auf eine Temperatur im Bereich von 60°C bis 100°C erhitzt wird.

3. Verfahren nach einem der vorhergehenden Ansprüche; wobei der Schritt a) in einer Kolonne durchgeführt wird, wobei die erste Fraktion der absorbierenden Lösung und die regenerierte absorbierende Lösung am Kopf der Kolonne eingeleitet werden.

4. Verfahren nach einem der Ansprüche 1 und 2, wobei der Schritt a) in einer Kolonne durchgeführt wird, wobei die regenerierte absorbierende Lösung am Kopf der Kolonne eingeleitet wird, wobei die erste Fraktion der absorbierenden Lösung an einer Stelle zwischen dem Sumpf und dem Kopf der Kolonne eingeleitet wird.

5. Verfahren nach einem der vorhergehenden Ansprüche, wobei in Schritt c) eine der folgenden Trenntechniken zur Anwendung kommt: Dekantation, Zentrifugation, Filtration.

6. Verfahren nach einem der Ansprüche 1 bis 4, wobei die Schritte b) und c) in einem Membrankontaktor durchgeführt werden.

7. Verfahren nach einem der vorhergehenden Ansprüche, wobei die mindestens eine reaktive Verbindung aus der Gruppe ausgewählt ist, die aus Folgendem besteht: den Aminen, den Alkanolaminen, den Polyaminen, den Aminosäuren, den Alkalisalzen von Aminosäuren, den Amiden, den Harnstoffen, den Phosphaten, den Carbonate und den Boraten von Alkalimetallen.

8. Verfahren nach Anspruch 7, wobei es sich bei der mindestens einen reaktiven Verbindung um N,N,N',N'-Tetramethyl-1,6-hexandiamin handelt.

9. Verfahren nach Anspruch 8, wobei die absorbierende Lösung darüber hinaus ein Salz aufweist, das die Eigenschaft fördert, zwei trennbare Phasen zu bilden, wenn die Lösung eine gewisse Menge an sauren Verbindungen absorbiert hat und erhitzt wird.

10. Verfahren nach einem der Ansprüche 8 und 9, wobei die absorbierende Lösung darüber hinaus eine organische Verbindung, die aus der Gruppe ausgewählt ist, die aus Folgendem besteht: einem Amin, einem Alkohol, einem Keton, einem Vinylalkohol, einem Vinylketon, einem Etheralkohol, einem Etherketon, einem Glykol, einem Polyethylenglykol, einem Polypropylenglykol, einem Ethylenglykol-Propylenglykol-Copolymer, einem Glykolether, einem Thioglykol, einem Thioalkohol, einem Sulfon, einem Sulfoxid, einem N-alkylierten Pyrrolidon, einem N-alkylierten Piperidon, einem Cyclotetramethylensulfon, einem N-Alkylformamid, einem N-Alkylacetamid, einem Alkylphosphat, einem Alkylencarbonat und einem Dialkylcarbonat.

11. Verfahren nach einem der vorhergehenden Ansprüche, wobei der Abgasstrom aus der Gruppe ausgewählt ist, die aus Erdgas, Synthesegas, Verbrennungsrauchgasen, Raffineriegasen, Restgasen aus dem Claus-Verfahren, Gasen aus der Vergärung von Biomasse besteht.
